Europäisches Patentamt

European Patent Office

Office européen des brevets

(19)

(11) **EP 0 560 189 B1**

(12) **EUROPÄISCHE PATENTSCHRIFT**

(45) Veröffentlichungstag und Bekanntmachung des Hinweises auf die Patenterteilung:
**20.11.1996 Patentblatt 1996/47**

(51) Int Cl.⁶: **C09D 5/44**, C08L 101/02

(21) Anmeldenummer: **93103366.6**

(22) Anmeldetag: **03.03.1993**

(54) **Kunstharze**

Synthetic resin

Résine synthétique

(84) Benannte Vertragsstaaten:
**AT BE CH DE DK ES FR GB IT LI NL PT SE**

(30) Priorität: **11.03.1992 DE 4207653**

(43) Veröffentlichungstag der Anmeldung:
**15.09.1993 Patentblatt 1993/37**

(60) Teilanmeldung: **96107882.1**

(73) Patentinhaber: **BASF Lacke + Farben AG
48165 Münster-Hiltrup (DE)**

(72) Erfinder:
- **Huemke, Klaus, Dr.
  W-6701 Friedelsheim (DE)**
- **Hoffmann, Gerhard, Dr.
  W-6701 Otterstadt (DE)**
- **Faul, Dieter, Dr.
  W-6702 Bad Duerkheim (DE)**

(74) Vertreter: **Fitzner, Uwe, Dr. et al
Dres. Fitzner & Christophersen,
Rechts- und Patentanwälte,
Kaiserswerther Str. 74
40878 Ratingen (DE)**

(56) Entgegenhaltungen:
**EP-A- 0 380 009          EP-A- 0 442 533
US-A- 4 297 261**

- **File supplier PAJ/JPO & JP-A-3006269 (Honny Chem Ind) 11/1 91 *abstract***
- **File supplier PAJ/JPO &JP-A-3239770 (Kansai paint)**
- **File supplier PAJ/JPO & JP-A-63169398 (Nippon Paint) 13/7 88 abstract***
- **Derwent Publications Ltd., London, GB; AN 92-394642 & JP-A-4 293 973 (NIPPON PAINT) 19. Oktober 1992**

**Beschreibung**

Die vorliegende Erfindung betrifft Kunstharze, die als wesentliche Komponenten

A) 20 bis 95 Gew.-% vernetzbare Bindemittel aus der Gruppe der Polymerisations-, Polyadditions- oder Polykondensationsprodukte mit reaktionsfähigen Zentren in Form von Hydroxy-, Thio-, primären und/oder sekundären Aminogruppen und/oder hydrophilen Zentren in Form von Ammonium-, Sulfonium- und/oder Phosphoniumgruppen und

B) 5 bis 80 Gew.-% Polymerisate, aufgebaut aus einem Kern und einer oder mehreren Schalen

sowie darüber hinaus

C) 0 bis 50 Gew.-% eines oder mehrerer Vernetzer und

D) 0 bis 50 Gew.-% einer Pigmentzubereitung aus einem oder mehreren Pigmenten und einem Harz mit oberflächenaktiven Eigenschaften und

E) 0 bis 10 Gew.-% Zusatzszoffe und/oder Hilfsmittel.

enthalten.

Ferner betrifft die vorliegende Erfindung ein Verfahren zur Herstellung dieser Kunstharze sowie deren Verwendung in Elektrotauchlacken.

Um Metallteile zu beschichten, wird, insbesondere in der Automobilindustrie, das kathodische Elektrotauchlakkierverfahren immer häufiger angewandt. Dazu werden kathodisch abscheidbare Kunstharze benötigt, die den beschichteten Gegenstand vor Korrosion schützen. Gleichzeitig sollten die erhaltenen Überzüge elastisch sein, um nicht durch Schläge beschädigt zu werden.

Elektrotrauchlackierharze bestehen üblicherweise aus einem Bindemittel und verschiedenen Zusätzen, die die Eigenschaften der aus den Harzen erhältlichen Überzüge beeinflussen.

Pfropfcopolymere auf Acrylatbasis sind z.B. aus der DE-A1-38 30 626 bekannt. Ferner werden beispielsweise in der EP-A2-342 042 Pfropfcopolymere beschrieben, deren Haupt-, und Nebenketten unterschiedliche Polarität aufweisen. In der EP 0442 533 werden Polymerisate beschrieben, die "Vinylsilane als polymerisierbares Monomer mit hydrolysierbaren Alkoxysilangruppen enthalten. Die Polymerisierung geschieht unter Verwendung von Monomeren, die mindestens zwei polymerisierbare ungesättigte Gruppen enthalten. Weiterhin enthalten die Schalen der Polymeren blockierte Isocyanatgruppen.

Aufgabe der vorliegenden Erfindung war es Kunstharze zu entwickeln, aus denen Überzüge hergestellt werden können, die schlagfest sind, eine guten Korrosionsschutz bieten und gleichzeitig sowohl gut verlaufen als auch gut an nachfolgenden Lackschichten haften.

Diese Aufgabe wird dadurch gelöst, daß als Komponente (B) Emulsionspolymerisate enthalten sind, hergestellt durch Emulsionspolymerisation von 30 bis 95 Gew.-% eines Monomerengemisches ($\alpha$) aus

$\alpha_1$) 10 bis 90 Gew.-% mindestens eines konjugierten Diens in Form von Butadien, Isopren oder Chloropren

$\alpha_2$) 10 bis 90 Gew.-% mindestens eines vinylaromatischen Monomeren in Form von Styrol sowie dessen ein- oder mehrfach kernsubstituierten Derivaten, beispielsweise 4-Methylstyrol, 4-Ethylstyrol, 4-Isopropylstyrol, 3,4-Dimethylstyrol, 4-Chlorstyrol, 4-Bromstyrol, 3,4-Dichlorstyrol

$\alpha_3$) 0 bis 30 Gew.-% mindestens eines zwei- oder mehrfach ethylenisch ungesättigten Monomeren mit mindestens einer nicht konjugierten Doppelbindung

$\alpha_4$) 0 bis 30 Gew.-% mindestens eines weiteren Monomeren

$\beta$) anschließende Emulsionspolymerisation, in Gegenwart des nach Stufe ($\alpha$) erhaltenen Emulsionspolymerisates, von 5 bis 70 Gew.-% eines Monomerengemisches ($\beta$) aus

$\beta_1$) 10 bis 70 Gew.-% mindestens eines vinylaromatischen Monomeren

$\beta_2$) 30 bis 90 Gew.-% mindestens eines $C_1$-$C_{18}$-Alkylmethacrylates

$\beta_3$) 0 bis 70 Gew.-% mindestens eines $C_1$-$C_{18}$-Alkylacrylates

$\beta_4$) 0 bis 30 Gew.-% mindestens eines zwei- oder mehrfach ethylenisch ungesättigten Monomeren mit mindestens einer nicht konjugierten Doppelbindung

$\beta_5$) 0 bis 30 Gew.-% mindestens eines weiteren Monomeren, wobei sich die Gewichtsprozente der in den Stufen ($\alpha$) und ($\beta$) eingesetzten Monomerengemische auf die Komponente B beziehen und sich auf 100 Gew.-% addieren.

Komponente (A)

Erfindungsgemäß enthalten die Kunstharze als Komponente (A) ein vernetzbares Bindemittel oder eine Mischung verschiedener derartiger Bindemittel. Der Bindemittelgehalt liegt im allgemeinen zwischen 20 bis 95 Gew.-%, vorzugsweise zwischen 30 bis 85 Gew.-%.

Die Grundbausteine der als Komponente (A) in Betracht kommenden Bindemittel sind Polymerisations-, Polykondensations- oder Polyadditionsprodukte, die reaktionsfähige Zentren in Form von Hydroxy-, Thio-, primären oder sekundären Aminogruppen enthalten. Über diese reaktiven Zentren können die Bindemittel beispielsweise durch Protonieren wasserdispergierbar oder durch Reaktion mit einem Vernetzer (Komponente (C)) vernetzt werden. Die mittleren Molekulargewichte $\overline{M}_w$ der Grundbausteine liegen im allgemeinen zwischen 200 und 5000, vorzugsweise zwischen 250 und 3000, wobei der Gehalt an reaktiven Zentren im allgemeinen von 1,5 bis 3,0, vorzugsweise von 1,8 bis 2,5 Äquivalenten pro Molekül liegt. Beispiele geeigneter Materialien sind Polyester, Alkydharze, Polyether, Polyacrylate, Polyurethane und Polyepoxide. Diese Grundbausteine können zusätzlich mit Aminen, Alkoholen, Thiolen oder Mischungen dieser Verbindungen umgesetzt werden. Geeignete Polyester sind solche aus aliphatischen und/

der Grundbausteine liegen im allgemeinen zwischen 200 und 5000, vorzugsweise zwischen 250 und 3000, wobei der Gehalt an reaktiven Zentren im allgemeinen von 1,5 bis 3,0, vorzugsweise von 1,8 bis 2,5 Äquivalenten pro Molekül liegt. Beispiele geeigneter Materialen sind Polyester, Alkydharze, Polyether, Polyacrylate, Polyurethane und Polyepoxide. Diese Grundbausteine können zusätzlich mit Aminen, Alkoholen, Thiolen oder Mischungen dieser Verbindungen umgesetzt werden. Geeignete Polyester sind solche aus aliphatischen und/oder aromatischen Dicarbonsäuren mit 4 bis 10 Kohlenstoffatomen und mehrwertigen Alkoholen bzw. Thiolen. Geeignete Alkydharze sind ähnlich aufgebaut, nur enthalten sie zusätzlich eine oder mehrere Monocarbonsäuren, z.B. Fettsäuren. Auch Alkydharze, welche Glycidylester von verzweigten Carbonsäuren enthalten, können verwendet werden. Aliphatische oder araliphatische Polyether mit reaktionsfähigen Zentren sind ebenfalls einsetzbar. Zweckmäßigerweise können sie durch Umsetzen von zwei- und/oder mehrwertigen Alkoholen mit Ethlyen- und/oder Propylenoxid erhalten werden. Zu der Gruppe der Polymerisationsprodukte gehören Polyacrylate, die durch Copolymerisation von Hydroxy- oder Aminogruppen enthaltenden Monomeren bzw. einer Mischung verschiedener solcher Monomerer mit anderen ungesättigten Monomeren hergestellt werden können, wie Aminoacrylat- und -methacrylatharze. Weiterhin ist es möglich, epoxidgruppentragende Acrylate wie Glycidylmethacrylat zu polymerisieren und die Polymerisate durch Umsetzen mit Aminen zu derivatisieren. Als Polykondensationsprodukte sind z.B. Kondensationsprodukte aus Polycarbonsäuren mit Polyaminen einsetzbar. Umsetzungsprodukte aus dimerisierten oder trimerisierten Fettsäuren und Polyaminen wie Ethylendiamin, 1,2- und 1,3-Diaminopropan, Diethylentriamin, Dipropylentriamin, Triethylentetraamin sind geeignet, sofern sie die erforderlichen reaktionsfähigen Zentren enthalten. Polyurethane aus aliphatischen und/oder aromatischen Diisocyanaten und aliphatischen Diolen haben sich ebenfalls als geeignet erwiesen, sofern sie die erforderlichen reaktionsfähigen Zentren aufweisen.

Bevorzugte Bindemittel sind solche, deren Grundstruktur auf Epoxidharzen basiert.

Es können Epoxidharze eingesetzt werden, die Umsetzungsprodukte mehrwertiger Phenole mit Epihalogenhydrin sind, wobei das Molekulargewicht durch das Verhältnis Phenol zu Epihalogenhydrin gesteuert werden kann. Beispiele für derartige mehrwertige Phenole sind Resorcin, Hydrochinon, 2,2-Di-(4-hydroxyphenyl)propan (Bisphenol A), p,p'-Dihydroxybenzophenon, p,p'-Dihydroxydiphenyl, 1,1-Di-(4-hydroxyphenyl)ethan, Bis-(2-hydroxynaphthyl)-methan, 1,5-Dihydroxynaphthylen und Novolake. Bisphenol A wird bevorzugt verwendet. Das bevorzugte Epihalogenhydrin ist Epichlorhydrin. Neben Epoxidharzen aus mehrwertigen Phenolen und Epihalogenhydrin können Polyglycidylether mehrwertiger Alkohole wie Ethylenglykol, Diethylenglykol, Triethylenglykol, 1,2-Propylenglykol, 1,3-Propandiol, 1,4-Butandiol, 1,5-Pentandiol, 1,6-Hexandiol, 1,2,6-Hexantriol, Glycerin oder Bis-(4-hydroxycyclohexyl)-2,2-propan verwendet werden.

Ganz besonders bevorzugt ist es Epoxidharze, die Diglycidylether von Bisphenol A sind, mit mehrwertigen Phenolen, insbesondere Bisphenol A, zu modifizieren.

Die Epoxidharze können mit einem gesättigten oder ungesättigten primären und/oder sekundären Amin oder Mischungen verschiedener Amine umgesetzt werden. Zu den Aminen zählen Alkylamine, Alkylalkanolamine, Polyoxyalkylenpolyamine und mehrwertige Polyolefinamine.

Eine weitere Möglichkeit die Epoxidharze zu modifizieren besteht darin, sie mit sekundären Aminen umzusetzen, die geblockte primäre Aminogruppen enthalten, wie Methylisobutylketimine.

Falls gewünscht, können die mit Aminen modifizierten Epoxidharze mit gesättigten oder ungesättigten Polycarbonsäuren kettenverlängert werden, z.B. mit Sebacinsäure oder dimerer Fettsäure. Eine Mitverwendung von Monocarbonsäuren wie Stearinsäure oder Fettsäure ist ebenfalls möglich.

Die Bindemittel haben im allgemeinen ein mittleres Molekulargewicht von etwa 200 bis etwa 20000. Sie können selbstvernetzende Gruppen tragen, die beispielsweise durch Umsetzen mit halbblockierten Isocyanaten in das Harz eingeführt werden können. Kunstharze, deren Bindemittel (A) nicht selbstvernetzend sind, enthalten noch eine Vernetzerkomponente (C).

Komponente (B)

Erfindungsgemäß enthalten die Kunstharze als Komponente (B) ein Polymerisat, das aus einem Kern und einer Schale aufgebaut ist. Es kann auch eine Mischung verschiedener derartiger Polymerisate vewendet werden. In der Regel beträgt der Anteil der Komponente (B) an den Kunstharzen 5 bis 80 Gew.-%, vorzugsweise 5 bis 30 Gew.-%.

Diese erfindungsgemäßen Kern-Schale-Polymerisate sind durch mehrstufige Polymerisation, bevorzugt durch Emulsionspolymerisation in mehreren Stufen erhältlich.

Bei den erfindungsgemäßen Polymerisaten (B), die durch Emulsionspolymerisation in zwei Stufen hergestellt werden, handelt es sich um solche, bei der in der Stufe ($\alpha$) ein Monomerengemisch ($\alpha$) aus

$\alpha_1$) 10 bis 90 Gew.-% mindestens eines konjugierten Diens in Form von Butadiens Isoprens oder Chloroprens

$\alpha_2$) 10 bis 90 Gew.-% mindestens eines vinylaromatischen Monomeren in Form von Styrol sowie dessen ein- oder mehrfach kernsubstituierten Derivaten, beispielsweise 4-Methylstyrol, 4-Ethylstyrol, 4-Isopropylstyrol, 3, 4-Dimethylstyrol, 4-Chlorstyrol, 4-Bromstyrol, 3,4-Dichlorstyrol.

$\alpha_3$) 0 bis 30 Gew.-%, vorzugsweise 10 bis 30 Gew.-% mindestens eines zwei- oder mehrfach ethylenisch ungesättigten Monomeren mit mindestens einer nicht konjugierten Doppelbindung

$\alpha_4$) 0 bis 30 Gew.-%, vorzugsweise 10 bis 30 Gew.-% mindestens eines weiteren Monomeren

eingesetzt wird.

In der Stufe ($\beta$) wird ein Monomerengemisch ($\beta$) aus

$\beta_1$) 10 bis 70 Gew.-%, vorzugsweise 10 bis 25 Gew.-% mindestens eines vinylaromatischen Monomeren

$\beta_2$) 30 bis 90 Gew.-%, vorzugsweise 30 bis 60 Gew.-% eines $C_1$-$C_{18}$-Alkylmethacrylates

$\beta_3$) 0 bis 70 Gew.-%, vorzugsweise 30 bis 60 Gew.-% eines $C_1$-$C_{18}$-Alkylacrylates

$\beta_4$) 0 bis 30 Gew.-%, vorzugsweise 10 bis 30 Gew.-% eines zwei- oder mehrfach ethylenisch ungesättigten Monomeren mit mindestens einer nicht konjugierten Doppelbindung

$\beta_5$) 0 bis 30 Gew.-%, vorzugsweise 5 bis 30 Gew.-% mindestens eines weiteren Monomeren

verwendet.

Der Gewichtsanteil des Monomerengemisches ($\alpha$) am gesamten Polymerisat (B) beträgt 30 bis 95 Gew.-%, bevorzugt 30 bis 70 Gew.-%. Da sich die Gewichtsanteile der, in den Stufen ($\alpha$) und ($\beta$) eingesetzten, Monomerengemische ($\alpha$) und ($\beta$) auf 100 Gew.-% addieren, beträgt dementsprechend der Gewichtsanteil des Monomerengemisches ($\beta$) am gesamten Polymerisat (B) in der Regel 5 bis 70 Gew.-%, bevorzugt 30 bis 70 Gew.-%.

Als vinylaromatische Monomere eignen sich Styrol sowie dessen ein- oder mehrfach kernsubstituierte Derivate, beispielsweise 4-Methylstyrol, 4-Ethylstyrol, 4-Isopropylstyrol, 3,4-Dimethystyrol, 4-Chlorstyrol, 4-Bromstyrol, 3,4-Dichlorstyrol.

Besonders bevorzugt ist Styrol.

Als konjugiertes Dien ist Butadien besonders bevorzugt. Daneben kommen Isopren und Chloropren in Betracht.

Bevorzugte Alkylmethacrylate sind $C_1$-$C_4$-Alkylmethacrylate, insbesondere Methylmethacrylat.

Unter den Alkylacrylaten sind die $C_1$-$C_{12}$-Alkylacrylate, z.B. Methylacrylat, Ethylacrylat, Butylacrylat, 2-Ethylhexylacrylat, Laurylacrylat, von besonderer Bedeutung.

Als vernetzend wirkende zwei- oder mehrfach ethylenisch ungesättigte Monomere mit mindestens zwei isolierten Doppelbindungen sind z.B. Allyl-, Methallyl- und Vinylester von Di-, Tri- oder höheren Carbonsäuren wie z.B. Adipinsäuredivinylester, Phthalsäurediallylester, Maleinsäurediallylester, Fumarsäurediallylester; Allyl-, Methallyl- und Vinylether mehrfunktioneller Alkohole wie Ethylenglykoldivinylether, 1,3-Butandioldivinylether, 1,4-Butandioldivinylether, Pentaerythrittriallylether; Ester der Acryl- oder Methacrylsäure mit mehrwertigen Alkoholen wie Ethylenglykoldi(meth) acrylat, 1,2-Propandioidi(meth)acrylat, 1,3-Propandioldi(meth)-acrylat, 1,3-Butandioldi(meth)acrylat, 1,4-Butandioldi (meth)acrylat, Oligo- oder Polyethylenglykoldi(meth)acrylat, Divinylbenzol oder Mischungen der genannten Substanzen geeignet. Bevorzugt sind zweifach ungesättigte Monomere, insbesondere Divinylbenzol sowie 1,3-Butandioldi (meth)acrylat und 1,4-Butandioldi(meth)acrylat.

Weitere Monomere können z.B. Vinylether wie Vinylisobutylether sowie Vinylester wie Vinylacetat oder Vinylpropionat sein. Es können aber auch ethylenisch ungesättigte Nitrile wie Acrylnitril oder Methacrylnitril eingesetzt werden. In den Stufen ($\alpha$) und ($\delta$) kommen als weitere Monomere auch die obengenannten Alkyl(meth)acrylate in Betracht.

Die Herstellung der Pfropfcopolymerisate erfolgt, wie bereits erwähnt, bevorzugt durch Emulsionspolymerisation. Als Emulgatoren dienen z.B. Natrium-, Kalium- oder Ammoniumsalze von gesättigten oder ungesättigten $C_8$-$C_{20}$-Fettsäuren wie Laurinsäure, Stearinsäure, Palmitinsäure, Ölsäure, $C_8$-$C_{20}$-Alkylsulfonsäuren, Schwefelsäure-$C_8$-$C_{20}$-alkylestern, Alkylbenzolsulfonsäuren, Abiethinsäure und deren Derivaten, Sulfobernsteinsäurealkylestern, alkylierten Diphenylethersulfonsäuren.

Durch die Wahl von Art und Menge des Emulgators kann in bekannter Weise die Teilchengröße der Emulsion eingestellt werden. Sie kann zwischen 50 und 150 nm liegen. Bevorzugt liegt sie im Bereich von 80 bis 120 nm. Durch die Teilchengröße werden sowohl die mechanischen Eigenschaften (Schlagzähigkeit) beeinflußt als auch die Oberflächenbeschaffenheit der aus den Kunstharzen erhältlichen Lacküberzüge.

Als Initiatoren können wasserlösliche thermisch zerfallende Initiatoren oder Redoxsysteme eingesetzt werden. Geeignete thermisch zerfallende Initiatoren sind beispielsweise Natrium-, Kalium- oder Ammoniumpersulfat sowie wasserlösliche Azoverbindungen wie das Natriumsalz der 4,4'-Azo-bis-(4,4'-cyanopentansäure). Als Redoxsysteme kommen beispielsweise Cumolhydroperoxid, Diisopropylbenzolhydroperoxid, t-Butylhydroperoxid, t-Butylperacetat in Kombination mit Reduktionsmitteln wie Natriumformaldehydsulfoxylat oder Ascorbinsäure in Gegenwart von Eisensalzen in Betracht. Auch die genannten Persulfate können in Kombination mit Reduktionsmitteln wie Natrium- oder Kaliummetabisulfit in Redoxsystemen eingesetzt werden.

Die Polymerisationstemperatur liegt im allgemeinen zwischen 10 und 100°C, bevorzugt bei 50 bis 90°C.

Es werden zunächst die Monomeren der ersten Stufe, z.B. ($\alpha$) polymerisiert. Danach werden die Monomeren der weiteren Stufe ($\beta$) zur wäßrigen Emulsion gegeben. Die Monomeren in den einzelnen Stufen werden zu mehr als 50 Gew.-%, bevorzugt zu mehr als 70 Gew.-%, besonders bevorzugt zu mehr als 80 Gew.-% auspolymerisiert, bevor mit der Zugabe der Monomeren einer weiteren Stufe begonnen wird.

Der Feststoffgehalt der Emulsionen beträgt bevorzugt 20 bis 70 Gew.-%.

Das Polymerisat (B) kann aus der Emulsion bzw. Dispersion in bekannter Weise z.B. durch Fällung oder Sprühtrocknung isoliert oder, wie es bevorzugt wird, in Form der Emulsion oder Dispersion weiterverwendet werden.

Komponente C

Der als Komponente (C) im allgemeinen in 0 bis 50, vorzugsweise 5 bis 40 Gew.-% im Kunstharz gegebenenfalls enthaltene Vernetzer kann ein blockierter Isocyanatvernetzer, ein Transesterifizierungs-, Transamidierungs- oder Transaminierungsvernetzer sein. Es können aber auch Mischungen verschiedener Vernetzer verwendet werden. Vernetzer (C) kann separater Bestandteil des Kunstharzes sein. Die Vernetzermoleküle können aber auch mit dem Bindemittel (A) verknüpft werden. Erst bei Bedarf erfolgt durch Einstellen geeigneter Bedingungen die Vernetzung dieser sogenannten selbstvernetzenden Bindemittel.

Als blockierte Isocyanatvernetzer kommen z.B. Polyoxyalkylenpolyisocyanate mit möglichst hohem Anteil an Polyoxyalkylendiisocyanat, aromatische Diisocyanate wie Toluylendiisocyanat, aliphatische Diisocyanate wie trimerisiertes Hexamethylendiisocyanat in Betracht. Diese können beispielsweise mit Ketoximen oder Polyolen verkappt werden.

Verbindungen, die Transamidierungsvernetzer bilden, sind Verbindungen, vorzugsweise Polyesterharze, die freie Carboxylgruppen enthalten, an denen Carbalkoxymethylgruppen angelagert werden können. Die Carbalkoxymethylester reagieren mit freien primären und/oder sekundären Aminogruppen der Bindemittel unter Amidbildung.

Bindemittel, die als reaktionsfähige Zentren Hydroxylgruppen haben, können z.B. durch Transesterifizierungsvernetzer ausgehärtet werden. Diese Vernetzer können beispielsweise dadurch hergestellt werden, daß Epoxidharze auf der Basis von Bisphenol A und Epihalohydrin in einem ersten Reaktionsschritt mit einer Dicarbonsäure umgesetzt werden. In einem zweiten Reaktionsschritt lassen sich diese Polyepoxid-Dicarbonsäureaddukte z.B. mit Glykolsäureestern z.B. Glykolsäuremethylester oder mit Alkylenoxiden wie Ethylenoxid, Propylenoxid oder Glycidylestern verzweigter aliphatischer Carbonsäuren, insbesondere Versaticsäureglycidylester umsetzen.

Mannich-Basen, die Umsetzungsprodukte aus Phenolen, Formaldehyd und sekundären Aminen sind, können ebenfalls als Vernetzerkomponente (C) verwendet werden. Zur Herstellung dieser Transaminierungsvernetzer werden beispielsweise epoxidgruppen-tragende Verbindungen wie Polyoxypropylendiglcidylether mit mehrwertigen Phenolen wie Bisphenol A umgesetzt und anschließend mit Dialkylaminen wie Dimethylamin, Diethylamin, Piperidin und mit Formaldehyd oder Verbindungen, die Formaldehyd liefern umgesetzt.

Durch entsprechende Reaktionen können in die obengenannten Vernetzer zusätzliche Hydroxy-, Thiol- und/oder Amingruppen eingeführt werden.

Komponente D

Gewünschtenfalls können den Kunstharzen Pigmentzubereitungen zugegeben werden. So können die Kunstharze vorzugsweise von 0 bis 50 Gew.-%, insbesondere von 5 bis 40 Gew.-% einer Pigmentzubereitung aus einem oder mehreren Pigmenten und einem Harz mit oberflächenaktiven Eigenschaften, ein sogenanntes Reibharz, enthalten.

Gebräuchliche Pigmente sind beispielsweise Eisen- und Bleioxide, Strontiumcarbonat, Ruß, Titandioxid, Talkum, Bariumtitanat, Cadmiumgelb, Cadmiumrot, Chromgelb, Phthalocyaninblau oder metallische Pigmente wie Aluminiumflocken.

Die Harze der Zubereitung sollten ein hohes Pigmenttragevermögen besitzen und mit dem jeweiligen Bindemittel des Kunstharzes verträglich sein. Bevorzugte Reibharze enthalten Diglcidylether auf der Basis von Bisphenol A und Epichlorhydrin, die mit einem Amin, besonders einem aliphatischen Diamin wie Hexamethylendiamin, modifiziert sind.

Komponente E

Zusätzlich können die erfindungsgemäßen Kunstharze einen oder mehrere Zusatzstoffe wie verschiedene Füller, Antioxidantien, UV-Absorber, verlaufffördernde Mittel, Entschäumer, und andere Zusätze, z.B. Polyvinylether, enthalten. Diese Materialien machen in der Regel von 0 bis etwa 10 Gew.-%, insbesondere von 0 bis 5 Gew.-% des Kunstharzes aus. Zu den bevorzugten Füllern gehören Aluminiumsilikate, Aluminiumsulfate und Bariumsulfat. Benzotriazole und Oxalsäureanilide haben sich als besonders gute UV-Absorber erwiesen. Butylglykol und Propylenglykolphenylether sind Beispiele für verlaufffördernde Mittel. Entschäumend wirken beispielsweise Fettsäureester von Butin-1,4-diol oder auch naphthenische Mineralöle.

Die einzelnen Komponenten des Kunstharzes können jeweils in organischen Lösungsmitteln gelöst vorliegen. In Betracht kommende Lösungsmittel sind aromatische Kohlenwasserstoffe wie Toluol und Xylol, Glykole, Glykolether wie Diethylenglykolmethylether und Alkohole.

Das Kunstharz kann als Mischung der Komponenten oder deren Lösungen als Überzugsmittel für verschiedene Substrate dienen.

Durch die Zugabe von Säuren, bevorzugt Carbonsäuren wie Ameisen-, Essig- oder Milchsäuren, aber auch anorganischer Säuren z.B. Phosphorsäure, können die Kunstharze in Wasser dispergiert und durch übliche Methoden auf Substrate aus Holz, Kunststoff oder Metall aufgebracht werden. Bevorzugt ist es jedoch, die Komponenten jeweils getrennt zu protonieren, getrennt in Wasser zu dispergieren, gewünschtenfalls das organische Lösungsmittel abzuziehen und anschließend die Einzeldispersionen zu mischen. Selbstverständlich ist es auch möglich, den einzelnen Komponenten jeweils die Zusatzstoffe zuzugeben und anschließend zu dispergieren.

Die erfindungsgemäßen Kunstharze eignen sich in Form ihrer wäßrigen Dispersionen für die Elektrotauchlackierung von elektrisch leitfähigen Gegenständen, wie Metallteilen. Für die kathodische Elektrotauchlackierung wird im allgemeinen ein Feststoffgehalt des Elektrotauchbades von 5 bis 40 Gew.-%, vorzugsweise von 10 bis 30 Gew.-% eingestellt. Die Abscheidung erfolgt üblicherweise bei Temperaturen zwischen 15°C und 40°C, vorzugsweise zwischen 20 und 35°C während einer Zeit von 1 bis 5 min und bei pH-Werten zwischen 5 und 8, bevorzugt um den Neutralpunkt, bei Spannungen zwischen 50 und 500 V, vorzugsweise von 150 bis 450 V. Der zu beschichtende elektrisch leitfähige Gegenstand wird dabei als Kathode geschaltet. Der abgeschiedene Film wird bei Temperaturen von etwa 100°C bis etwa 200°C ca. 10 bis ca. 30 min gehärtet.

Die unter Verwendung der erfindungsgemäßen Kunstharze erhältlichen Überzüge weisen eine sehr gute Steinschlagfestigkeit bei gleichzeitig sehr gutem Korrosionsschutz auf. Außerdem sind die so erhältlichen Überzüge glatt.

Herstellung des Bindemittels

960 g eines Diglycidylethers auf Basis Bisphenol A mit einem Epoxidequivalentgewicht von etwa 490, 110 g Nonylphenol und 56 g Phenoxypropanol wurden auf 130°C unter Rühren erwärmt. Man gab 1,1 g Dimethylbenzylamin hinzu und ließ so lange reagieren, bis das Epoxidequivalentgewicht 1040 betrug. Man verdünnte mit 403 g eines Lösungsmittelgemisches aus Isobutanol und Butylglykol (Gewichtsverhältnis 9:1) und kühlte auf 60°C ab. Anschließend tropfte man Methylethanolamin hinzu und ließ noch weitere 10 Minuten reagieren. Dann wurden 98,2 g des Amidamins (s.u.) und 41 g Isobutanol-Butylglykol-Gemisch (9:1) hinzugegeben. Man hielt die Temperatur noch 2 Stunden auf 80°C. Feststoffgehalt:70,1 Gew.-%; Aminzahl:50,8 mg KOH/g.

Amidamin

290 g Hexamethylendiamin, 218 g Dimerfettsäure (z.B. Pripol® 1014, Fa. Unichema), 70 g Leinölfettsäure (z.B. Nouracid LE80, Fa. Akzo) und 31 g Xylol wurden auf 190°C erhitzt und 48 g Reaktionswasser-Xylol-Gemisch azeotrop abdestilliert. Man verdünnte mit 92 g Xylol. Anschließend wurden nochmals 7 g Hexamethylendiamin zugesetzt. Die Aminzahl des Produktes betrug 350 mg KOH und die Säurezahl 1,8 mg KOH/g.

IV) Herstellung der Pigmentzubereitung

660,8 g eines Bisphenol A Diglycidylethers mit einem Epoxidequivalentgewicht von 190 (z.B. Epoxidharz EPON 828 der Firma Shell) wurden mit 260,6 g Bisphenol A und 61,5 g Dodecylphenol gemischt und auf 110°C erhitzt bis sich eine klare Lösung gebildet hatte. Dann wurden 0,98 g Ethyltriphenylphosphoniumjodid zugesetzt, wonach die Temperatur auf 150°C anstieg. Nach dem Abklingen der exothermen Reaktion hielt man die Mischung 90 min lang bei 130°C. Anschließend wurde mit 513,5 g 2-Butoxyethanol verdünnt und auf 80°C gekühlt, woraufhin binnen 30 min 244,2 g Thiodiethanol (50 % aktiv) zugetropft wurden. Anschließend wurden 134,2 g Thiodiethanol (50 % aktiv) zugetropft. Anschließend wurden 134,1 g Dimethylolpropionsäure und 30,6 g Wasser zugesetzt. 98 g dieses Harzes wurden mit 175 g Titandioxid, 8 g Bleisilikat, 35 g Aluminumsilikat, 11 g Dibutylzinnoxid, 3,5 g Perlruß und 169,5 g Wasser zu einer Paste angerührt.

V) Herstellung der Elektrotauchlackierbäder

1780 g Bindemitteldispersion wurden mit jeweils 332 g der erfindungsgemäßen Polymerisate (B) und 698 g der Pigmentpaste versetzt und mit vollentsalztem Wasser auf 5000 g aufgefüllt. Bezogen auf den Gesamtfestgehalt der Elektrotauchlacke betrug der Polymerisatfestgehalt jeweils 10 Gew.-%. Die Elektrotauchlackierbäder wurden 7 Tage bei 30°C gerührt. An kathodisch geschalteten 190 x 150 mm großen Probeblechen aus zinkphosphatiertem Stahlblech wurden bei einer Spannung von 150 bis 500 V innerhalb von 2 Minuten bei einer Badtemperatur von 27°C Kunstharzfilme einer Dicke von 22 bis 24 μm abgeschieden. Anschließend wurden die Kunstharzfilme binnen 20 Minuten bei 165°C eingebrannt.

Die Zusammensetzungen der Bäder und die Prüfergebnisse sind in Tabelle III aufgelistet.

EP 0 560 189 B1

Tabelle III

| ETL-Bad Nr. | Polymerisat | Verlauf | ET [mm] | RI [Nm] | DB(~) [mm²/Rostgrad] | KWT U / F / K [mm] |
|---|---|---|---|---|---|---|
| erfindungsgemäß | | | | | | |
| 1 | B1 | 4 | 7.9 | 6.8 | 7.5/4 | 1.3 / 1 / 3 |
| 2 | B2 | 3 | 8.1 | 9.1 | 6.1/4 | 1.4 / 1 / 3 |
| 3 | B3 | 2 | 8.0 | 13.6 | 5.0/3 | 1.5 / 1 / 2 |
| 4 | B4 | 2 | 8.9 | 18.1 | 3.5/2 | 1.1 / 0 / 1 |
| 5 | B5 | 1 | 9.5 | >18.1 | 2.5/1 | 1.1 / 0 / 1 |
| 6 | B6 | 4 | 6.9 | 9.1 | 7.6/3 | 1.4 / 1 / 3 |
| 7 | B7 | 3 | 7.5 | 11.3 | 6.0/3 | 1.3 / 1 / 2 |
| 8 | B8 | 3 | 7.6 | 13.6 | 5.8/3 | 1.6 / 2 / 3 |
| 9 | B9 | 2 | 7.4 | 15.8 | 6.1/2 | 1.2 / 1 / 2 |
| 10 | B10 | 2 | 8.1 | 18.1 | 5.3/1 | 1.3 / 0 / 1 |
| 11 | B11 | 4 | 6.6 | 4.5 | 8.1/4 | 1.4 / 1 / 3 |
| 12 | B12 | 4 | 6.9 | 6.8 | 7.2/3 | 1.1 / 1 / 1 |
| 13 | B13 | 2 | 8.0 | 11.3 | 5.0/2 | 1.3 / 1 / 2 |
| 14 | B14 | 2 | 8.2 | 15.8 | 4.2/2 | 1.6 / 1 / 3 |
| 15 | B15 | 2 | 8.8 | 18.1 | 3.9/1 | 1.1 / 1 / 1 |
| 16 | B16 | 3 | 6.9 | 4.5 | 7.6/3 | 1.7 / 0 / 3 |

8

Tabelle III Fortsetzung

| ETL-Bad Nr. | Polymerisat | Verlauf | ET [mm] | RI [Nm] | DB (-) [mm²/Rostgrad] | KWT U / F / K [mm] |
|---|---|---|---|---|---|---|
| erfindungsgemäß | | | | | | |
| 17 | B17 | 3 | 7.1 | 9.1 | 6.1/2 | 1.3 / 1 / 2 |
| 18 | B18 | 2 | 7.9 | 13.6 | 5.9/2 | 1.2 / 0 / 2 |
| 19 | B19 | 2 | 8.1 | 15.8 | 5.1/2 | 1.4 / 1 / 1 |
| 20 | B20 | 2 | 8.5 | 18.1 | 4.6/1 | 1.6 / 1 / 1 |
| Zum Vergleich | | | | | | |
| V1 | − | 3 | 4.9 | <1.1 | 13.7/5 | 2.2 / 2 / 5 |

Verlauf: Güte des Verlaufs in Notenstufen 1 (sehr guter Verlauf) bis 5 (sehr schlechter Verlauf)

ET: Eriksentiefung

RI: Reverse Impact, Schlagtiefung; Bestimmung mit einem mandrel impact tester der Fa. Gardner nach AST M D2794

DB(-): Mercedes-Benz-Einzelsteinschlagtest bei einer Prüftemperatur von −20°C; DIN 55 995, Verfahren A; Fa. Erichsen Technische Beschreibung Modell 490 (1981); Rostgrade 0 (kein Rost) bis 5 (sehr stark verrostet)

KWT: Klimawechseltest, 10 Zyklen; Unterwanderung U in mm; Flächenrost F sowie Kantenrost K in Notenstufen 0 (kein Rost) bis 5 (sehr stark verrostet)

EP 0 560 189 B1

**Patentansprüche**

1. Kunstharze, enthaltend als wesentliche Komponenten

   A) 20 bis 95 Gew.-% vernetzbare Bindemittel aus der Gruppe der Polymerisations-, Polyadditions- oder Polykondensationsprodukte mit reaktionsfähigen Zentren in Form von Hydroxy-, Thio-, primären und/oder sekundären Aminogruppen und/oder hydrophilen Zentren in Form von Ammonium-, Sulfonium- und/oder Phosphoniumgruppen und

   B) 5 bis 80 Gew.-% Polymerisate, aufgebaut aus einem Kern und einer Schale

   sowie darüber hinaus

   C) 0 bis 50 Gew.-% eines oder mehrerer Vernetzer und

   D) 0 bis 50 Gew.-% einer Pigmentzubereitung aus einem oder mehreren Pigmenten und einem Harz mit oberflächenaktiven Eigenschaften und

   E) 0 bis 10 Gew.-% Zusatzstoffe und/oder Hilfsmittel.

   dadurch gekennzeichnet, daß als Komponente (B) Emulsionspolymerisate enthalten sind, hergestellt durch Emulsionspolymerisation von 30 bis 95 Gew.-% eines Monomerengemisches ($\alpha$) aus

   $\alpha_1$) 10 bis 90 Gew.-% mindestens eines konjugierten Diens in Form von Butadiens Isoprens oder Chloroprens

   $\alpha_2$) 10 bis 90 Gew.-% mindestens eines vinylaromatischen Monomeren in Form von Styrol sowie dessen ein- oder mehrfach kernsubstituierten Derivaten beispielsweise 4-Methylstyrol, 4-Ethylstyrol, 4-Isopropylstyrol, 3, 4-Dimethylstyrol, 4-Chlorstyrol, 4-Bromstyrol, 3,4-Dichlorstyrol.

   $\alpha_3$) 0 bis 30 Gew.-% mindestens eines zwei- oder mehrfach ethylenisch ungesättigten Monomeren mit mindestens einer nicht konjugierten Doppelbindung

   $\alpha_4$) 0 bis 30 Gew.-% mindestens eines weiteren Monomeren

   $\beta$) anschließende Emulsionspolymerisation, in Gegenwart des nach Stufe ($\alpha$) erhaltenen Emulsionspolymerisates, von 5 bis 70 Gew.% eines Monomerengemisches ($\beta$) aus

   $\beta_1$) 10 bis 70 Gew.-% mindestens eines vinylaromatischen Monomeren

   $\beta_2$) 30 bis 90 Gew.-% mindestens eines $C_1$-$C_{18}$-Alkylmethacrylates

   $\beta_3$) 0 bis 70 Gew.-% mindestens eines $C_1$-$C_{18}$-Alkylacrylates

   $\beta_4$) 0 bis 30 Gew.-% mindestens eines zwei- oder mehrfach ethylenisch ungesättigtzen Monomeren mit mindestens einer nicht konjugierten Doppelbindung

   $\beta_5$) 0 bis 30 Gew.-% mindestens eines weiteren Monomeren, wobei sich die Gewichtsprozente der in den Stufen ($\alpha$) und ($\beta$) eingesetzten Monomerengemische auf die Komponente B beziehen und sich auf 100 Gew.-% addieren.

2. Kunstharze nach Anspruch 1, in dem die Monomerengemische ($\alpha$) und ($\beta$) aus Monomeren ausgewählt aus der Gruppe Butadien, Isopren, Styrol, $C_1$-$C_3$-Alkylstyrole, $C_1$-$C_4$-Acrylate, $C_1$-$C_4$-DialkylaminoC$_1$-$C_4$-acrylate und Hydroxy-$C_1$-$C_4$-acrylate, bestehen.

3. Verfahren zur Herstellung der Kunstharze gemäß den Ansprüchen 1 oder 2 dadurch gekennzeichnet, daß man eine wäßrige Emulsion der Komponente (B) mit einer wäßrigen Dispersion der übrigen Komponenten mischt.

4. Wäßrige Dispersion enthaltend von 5 bis 50 Gew.-% Kunstharze nach einem der Ansprüche 1 und 2.

**5.** Verwendung der wäßrigen Dispersion gemäß Anspruch 4 in Elektrotauchlackierbädern.

**6.** Mittels kathodischer Elektrotauchlackierung beschichteter Gegenstand, erhältlich unter Verwendung der wäßrigen Dispersionen gemäß Anspruch 5.

**Claims**

**1.** A synthetic resin containing, as essential components,

A) from 20 to 95% by weight of crosslinkable binders selected from the group consisting of the polymers, polyadducts or polycondensates having reactive centers in the form of hydroxyl, thio or primary and/or secondary amino groups and/or hydrophilic centers in the form of ammonium, sulfonium and/or phosphonium groups and

B) from 5 to 80% by weight of polymers composed of a core and a shell and furthermore

C) from 0 to 50% by weight of one or more crosslinking agents and

D) from 0 to 50% by weight of a pigment formulation consisting of one or more pigments and a resin having surfactant properties and

E) from 0 to 10% by weight of additives and/or assistants,

wherein component (B) is an emulsion polymer prepared by emulsion polymerization of from 30 to 95% by weight of a monomer mixture ($\alpha$) of

$\alpha_1$) from 10 to 90% by weight of at least one conjugated diene in the form of butadiene, isoprene or chloroprene,

$\alpha_2$) from 10 to 90% by weight of at least one vinylaromatic monomer in the form of styrene or its derivatives which are monosubstituted or polysubstituted in the nucleus, for example 4-methylstyrene, 4-ethylstyrene, 4-isopropylstyrene, 3,4-dimethylstyrene, 4-chlorostyrene, 4-bromostyrene and 3,4-dichlorostyrene,

$\alpha_3$) from 0 to 30% by weight of at least one di- or polyethylenically unsaturated monomer having at least one nonconjugated double bond and

$\alpha_4$) from 0 to 30% by weight of at least one further monomer

and

$\beta$) subsequent emulsion polymerization, in the presence of the emulsion polymer obtained in stage ($\alpha$), of from 5 to 70% by weight of a monomer mixture ($\beta$) of

$\beta_1$) from 10 to 70% by weight of at least one vinylaromatic monomer,

$\beta_2$) from 30 to 90% by weight of at least one $C_1$-$C_{18}$-alkyl methacrylate,

$\beta_3$) from 0 to 70% by weight of at least one $C_1$-$C_{18}$-alkyl acrylate,

$\beta_4$) from 0 to 30% by weight of at least one di- or polyethylenically unsaturated monomer having at least one nonconjugated double bond and

$\beta_5$) from 0 to 30% by weight of at least one further monomer, the percentages by weight of the monomer mixtures used in stages being based on component B and summing to 100% by weight.

**2.** A synthetic resin as claimed in claim 1, wherein the monomer mixtures ($\alpha$) and ($\beta$) consist of monomers selected from the group consisting of butadiene, isoprene, styrene, $C_1$-$C_3$-alkylstyrenes, $C_1$-$C_4$-acrylates, $C_1$-$C_4$-dialkylamino-$C_1$-$C_4$-acrylates and hydroxy-$C_1$-$C_4$-acrylates.

**3.** A process for the preparation of a synthetic resin as claimed in claim 1 or 2, wherein an aqueous emulsion of component (B) is mixed with an aqueous dispersion of the other components.

**4.** An aqueous dispersion containing from 5 to 50% by weight of a synthetic resin as claimed in claim 1 or 2.

**5.** Use of an aqueous dispersion as claimed in claim 4 in electrocoating baths.

**6.** An article coated by cathodic electrocoating and obtainable using an aqueous dispersion as claimed in claim 5.

**Revendications**

1. Résines synthétiques contenant en tant que composants essentiels,

   A) de 20 à 95 % en poids de liants réticulables du groupe des produits de polymérisation, de polyaddition ou de polycondensation avec des centres capables de réaction sous la forme de groupements hydroxy, thio, amino primaires et/ou secondaires et/ou avec des centres hydrophiles sous la forme de groupements ammonium, sulfonium et/ou phosphonium et

   B) de 5 à 80 % en poids de polymérisats constitués d'un noyau ou d'une enveloppe,

   ainsi que, de surcroît,

   C) de 0 à 50 % en poids d'un ou de plusieurs agents de réticulation et

   D) de 0 à 50 % en poids d'une préparation de pigment d'un ou de plusieurs pigments et d'une résine ayant des propriétés d'activité superficielle, et

   E) de 0 à 10 % en poids d'additifs et/ou d'adjuvants,

   caractérisées en ce que, en tant que composants (B) sont contenus des polymérisats en émulsion, préparés par polymérisation en émulsion de 30 à 95 % en poids d'un mélange de monomères α

   α1) de 10 à 90 % en poids au moins d'un diène conjugué sous la forme de butadiène, d'isoprène ou de chloroprène,

   α2) de 10 à 90 % en poids au moins d'un monomère vinylaromatique sous la forme de styrène ainsi que ses dérivés à substitution de noyau unique ou multiple, par exemple le 4-méthylstyrène, le 4-éthylstyrène, le 4-isopropylstyrène, le 3,4-diméthylstyrène, le 4-chlorostyrène, le 4-bromostyrène, le 3,4-dichlorostyrène,

   α3) de 0 à 30 % en poids au moins d'un monomère à insaturation éthylénique double ou multiple, ayant au moins une liaison double non conjuguée,

   α4) de 0 à 30 % en poids au moins d'un monomère supplémentaire,

   β) par polymérisation en émulsion subséquente, en présence du polymérisat en émulsion obtenu après l'étape α, de 5 à 70 % en poids d'un mélange de monomères (β)

   β1) de 10 à 70 % en poids au moins d'un monomère vinylaromatique,

   β2) de 30 à 90 % en poids au moins d'un méthacrylate d'alkyle en $C_1$-$C_{18}$,

   β3) de 0 à 70 % en poids au moins d'un acrylate d'alkyle en $C_1$-$C_{18}$,

   β4) de 0 à 30 % en poids au moins d'un monomère à insaturation éthylénique double ou multiple, ayant au moins une liaison double non conjuguée,

   β5) de 0 à 30 % en poids d'un monomère supplémentaire, les pourcentages en poids des mélanges de monomère utilisés dans les étapes α et β) se rapportant au composant B et s'additionnent de manière à faire 100 % en poids.

2. Résines synthétiques selon la revendication 1, qui se composent de mélanges de monomères (α) et β), choisis parmi le groupe butadiène, isoprène, styrène, $C_1$-$C_3$-alkylstyrènes, $C_1$-$C_4$-acrylates, $C_1$-$C_4$-dialkylamino-$C_1$-$C_4$-acrylates et hydroxy-$C_1$-$C_4$-acrylates.

3. Procédé de préparation des résines synthétiques conformément aux revendications 1 ou 2, caractérisé en ce que l'on mélange une émulsion aqueuse du composant (B) avec une dispersion aqueuse des autres composants.

4. Dispersions aqueuses contenant de 5 à 50 % en poids des résines synthétiques selon l'une quelconque des revendications 1 et 2.

5. Utilisation des dispersions aqueuses selon la revendication 4 dans des bains de laquage pour trempage électrophorétique.

6. Article revêtu à l'aide d'un laquage par trempage électrophorétique cathodique, que l'on peut obtenir par utilisation des dispersions aqueuses selon la revendication 5.